# FASCICULE DE BREVET EUROPEEN

(11) **EP 2 630 854 B1**
(45) Date de publication et mention de la délivrance du brevet: **03.06.2020**
(21) Numéro de dépôt: 13156589.7
(22) Date de dépôt: 25.02.2013
(51) Int. Cl.: A01B 33/16, A01B 49/02

(54) **Machine de travail du sol avec une planche niveleuse**
Bodenbearbeitungsmaschine mit einer Planier-Planke
Soil working machine with a leveling board

(30) Priorité: 27.02.2012 FR 1251757
(43) Date de publication de la demande: 28.08.2013
(73) Titulaire: KUHN S.A., 67700 Saverne (FR)
(72) Inventeur: Teitgen, Hervé, 57370 Phalsbourg (FR); Reinhardt, Michel, 67340 Bischholtz (FR); Fritsch, Michel, 67350 Grassendorf (FR)
(74) Mandataire: Esch, Esther Evelyne

(56) Documents cités:
- DE-U1- 8 714 440
- DE-U1- 8 803 705
- DE-U1-202009 009 721
- FR-A3- 2 485 869
- GB-A- 2 141 611

## Description

La présente invention se rapporte au domaine technique général du machinisme agricole et notamment aux machines agricoles destinées à travailler le sol. L'invention concerne une machine de travail du sol comportant une poutre transversale supportant des outils de travail, un organe de référence et une planche niveleuse s'étendant entre lesdits outils de travail et ledit organe de référence, ladite planche niveleuse étant réglable en hauteur par rapport auxdits outils de travail.

Des machines de travail du sol de ce genre sont connues. Il s'agit, par exemple, d'une herse rotative comportant une poutre transversale supportant des outils de travail du sol. Derrière les outils de travail, vu dans la direction de déplacement, sont agencés une planche niveleuse et un rouleau suiveur. La planche niveleuse s'étend entre les outils de travail et le rouleau suiveur. Cette planche niveleuse est montée de sorte à être réglable en hauteur sur le châssis, elle peut être soulevée ou abaissée par rapport aux outils de travail. Pour cela, elle est montée via un dispositif de guidage sur le châssis. La profondeur des outils de travail étant généralement réglée par rapport au rouleau suiveur, la hauteur de la planche niveleuse doit être adaptée après chaque réglage de profondeur.

La machine de travail du sol, décrite dans le document FR 2 947 984**,** montre l'utilisation d'un dispositif de couplage permettant d'établir une liaison entre la planche niveleuse et le rouleau suiveur. Ainsi, lors d'un réglage de la profondeur de travail, la hauteur de la planche niveleuse est réglée automatiquement. On remarque que la planche niveleuse est montée sur la poutre transversale et que sa hauteur est réglable par rapport aux outils de travail. Un dispositif de guidage lié à la poutre transversale assure un guidage vertical de la planche niveleuse. Lorsqu'il est nécessaire d'adapter la hauteur par rapport aux outils de travail, par exemple en cas d'usure des outils, l'utilisateur devra entreprendre un réglage de chaque côté de la machine. La planche niveleuse comporte plusieurs trous ménagés dans le rail de guidage. Pour réaliser ce réglage, l'utilisateur utilise un moyen auxiliaire sous la forme d'un levier excentrique. Dans un premier temps, le moyen auxiliaire pivote quelque peu jusqu'à pouvoir enlever le boulon du dispositif de couplage, puis un pivotement plus important permet de placer le boulon dans le perçage suivant. Cette manipulation est à répéter jusqu'à ce que la position souhaitée de la planche niveleuse soit atteinte. Le réglage doit être effectué alternativement d'un côté puis de l'autre de la machine de travail du sol pour éviter un blocage de la translation verticale de la planche niveleuse. Une telle manipulation est coûteuse en temps car elle doit être effectuée par palier et est difficile à réaliser pour une seule personne. Une telle opération est de plus quasi impossible à réaliser sur une machine repliable qui n'offre que peu d'accès au niveau de la partie centrale de la machine. Une machine semblable, avec un organe de référence et un dispositif de réglage en hauteur de la planche est connue de DE 8803705U1.

La présente invention a pour but de remédier aux inconvénients précités. Elle doit notamment proposer une machine agricole de travail du sol avec une planche niveleuse plus facile à régler.

A cet effet, une importante caractéristique de l'invention consiste en ce que ladite planche niveleuse présente une barre de commande actionné par l'intermédiaire d'un dispositif de réglage pour effectuer un réglage en hauteur centralisé et des moyens pour transformer un mouvement de rotation de ladite barre de commande en mouvement de translation de ladite planche niveleuse, lesdits moyens présentent un bras, une extrémité dudit bras est solidaire de ladite barre de commande et l'autre extrémité est liée à ladite planche niveleuse, ledit bras est pourvu d'un trou oblong dans lequel est amené à se déplacer un ergot, ledit ergot est lié à ladite planche niveleuse.

Grâce à ces caractéristiques, le réglage en hauteur de la planche niveleuse est réalisé à partir d'un seul côté de la machine et l'opération est effectuée de manière simple. Elle n'exige pas beaucoup d'effort physique pour l'utilisateur. L'adaptation de la hauteur de la planche niveleuse peut être effectuée en continu.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue de côté d'une machine de travail du sol selon la présente invention,
- la **figure 2** représente une vue en perspective de dessus de la machine de travail du sol,
- la **figure 3** montre une représentation partielle de la planche niveleuse en perspective agrandie vue de l'avant,

- La **figure 4** montre la planche niveleuse selon une vue trois quart arrière,
- la **figure 5** est une vue de côté de la planche niveleuse.

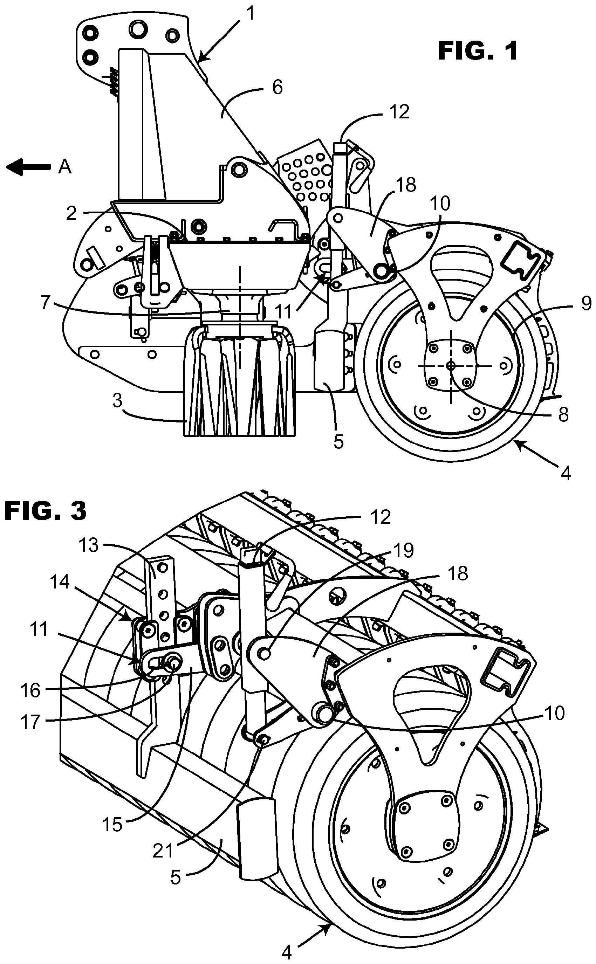

La machine agricole selon l'invention est une machine de travail du sol (1) destinée à la préparation d'un lit de semences. La machine de travail du sol (1) représentée sur la figure 1, comporte entre autres une poutre transversale (2), des outils de travail (3), un organe de référence (4) et une planche niveleuse (5). Afin de pouvoir être déplacée, la machine de travail du sol (1) comporte également un cadre (6) pourvu d'un dispositif d'attelage trois points à un tracteur (non représenté). Le tracteur est amené à déplacer et à animer la machine agricole (1) suivant une direction d'avance et un sens d'avance indiqué par la flèche (A). Dans la suite de la description, les notions suivantes "avant", "arrière" et "devant", "derrière" sont définies par rapport au sens d'avance (A).

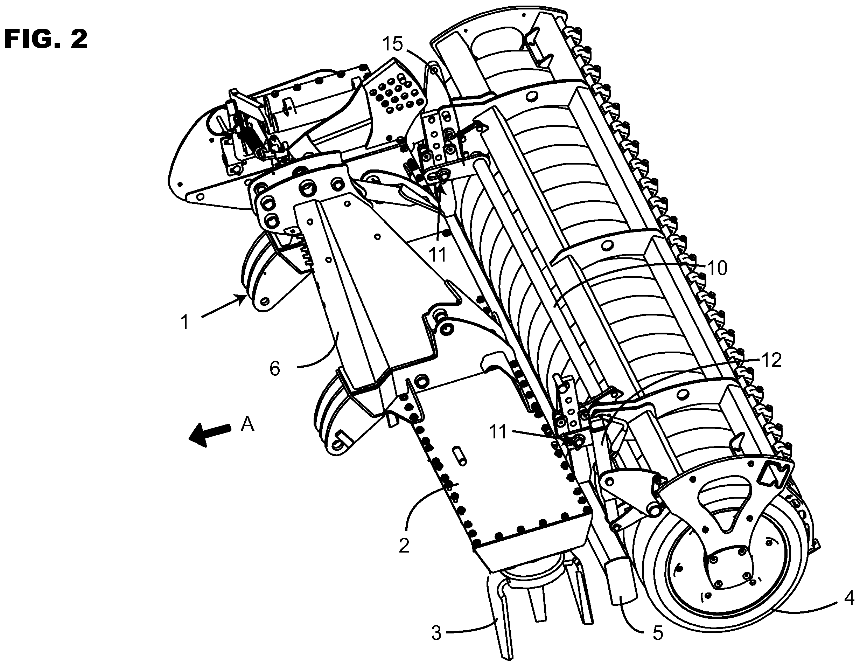

La figure 2 montre la machine de travail du sol en perspective. Le déflecteur latéral, ainsi que le bras de liaison entre la poutre (2) et l'organe de référence (4) côté gauche, ne sont pas représentés. On remarque que la poutre (2) s'étend transversalement au sens d'avance (A) et qu'elle supporte des outils de travail (3). A l'arrière des outils de travail (3) est disposé un organe de référence (4). Cet organe de référence (4) détecte la surface du sol et est destiné à contrôler la profondeur des outils de travail (3). Entre les outils de travail (3) et l'organe de référence (4) s'étend une planche niveleuse (5). La planche niveleuse (5) contribue à l'émiettement en éclatant les mottes projetées par les outils de travail (3). Elle permet de retenir les mottes à portée des outils de travail (3) jusqu'à ce qu'elles soient suffisamment réduites pour s'échapper. La planche niveleuse (5) s'étend sur toute la largeur de la machine de travail du sol (1) et retient les mottes de toute la rangée d'outils de travail (3). Elle est donc sensiblement parallèle à la poutre transversale (2). La planche niveleuse (5) sert également à niveler le sol une fois que les mottes sont passées dans les outils de travail (3). La planche niveleuse (5) est réglable en hauteur par rapport aux outils de travail (3) pour permettre une adaptation aux différents types de sol et aux conditions de travail. Ce réglage permet notamment de réajuster la position en hauteur de la planche niveleuse (5) en cas d'usure des outils de travail (3).

Dans l'exemple de réalisation représenté sur les figures 1 et 2, la machine de travail du sol (1) est une herse rotative destinée aux opérations de préparation de lit de semences. Elle a pour fonction d'ameublir superficiellement le sol et de niveler la surface. Les outils de travail (3) sont montés radialement sur des rotors (7) susceptibles de tourner autour d'un axe respectif sensiblement vertical durant le travail. Ils sont constitués d'une partie de travail et d'une partie de liaison s'étendant, de préférence, selon des directions sensiblement perpendiculaires de manière à réaliser une forme globale coudée. Les outils de travail (3) sont des lames ou des dents. Dans la poutre transversale (2) sont agencés des organes d'entraînement (non représentés) qui ont pour fonction de transmettre un mouvement de rotation, par exemple d'une prise de force d'un tracteur, vers les rotors (7). Cette herse rotative comporte plusieurs rotors (7) disposés les uns à côté des autres pour former une rangée dirigée transversale à la direction de déplacement.

L'organe de référence (4), représenté sur les figures, est un rouleau qui a pour fonction de parfaire l'action des outils de travail (3) en diminuant la taille des mottes en surfaces. Un tel rouleau a pour fonction de compléter l'action des outils de travail (3) par un émiettement, de tasser légèrement la terre et de niveler la surface. Le rouleau permet de contrôler la profondeur des outils de travail de manière précise. Le rouleau est susceptible de pivoter autour d'un axe longitudinal (8) qui s'étend transversalement et de préférence perpendiculairement au sens d'avance (A). Le rouleau comporte une âme sensiblement cylindrique (9) muni de couronnes équidistantes qui complète l'action de fragmentation des mottes en surface. Il s'agit alors d'un rouleau packer. Un organe de référence (4) du type rouleau silloneur pourra être utilisé lorsqu'on privilégie un rappui précis et individuel de chaque ligne de semis. Le choix du type d'organe de référence se fait en fonction de la consistance du sol. Lorsque le rouleau aura tendance à se colmater, ce dernier pourra être remplacé par au moins une roue de terrage qui assure une profondeur de travail régulière des outils de travail (3).

Selon une importante caractéristique de l'invention, la planche niveleuse (5) présente une barre de commande (10) pour effectuer un réglage en hauteur centralisé et des moyens (11) pour transformer un mouvement de rotation de la barre de commande (10) en mouvement de translation de la planche niveleuse (5). Grâce à ces caractéristiques, le réglage en hauteur de la planche niveleuse (5) est effectué à partir d'un seul côté de la machine de travail du sol (1). La barre de commande (10) est actionnée par l'intermédiaire d'un dispositif de réglage (12). Ainsi, le réglage en hauteur se fait de manière simple et est facile à mettre en oeuvre pour une seule personne. Grâce à la barre de commande (10) et aux moyens (11), le réglage en hauteur peut être réalisé en continu.

La figure 3 montre que la planche niveleuse (5) est montée sur l'organe de référence (4). Elle peut être soulevée ou abaissée par rapport à l'organe de référence (4), sa hauteur est ajustable par rapport aux outils de travail (3). La longueur de la barre de commande (10) correspond sensiblement à la largeur de la machine de travail du sol (1). La barre de commande (10) permet ainsi avec une commande en un seul point de régler de manière centralisée la hauteur de la planche niveleuse (5). Dans l'exemple de réalisation représenté à la figure 2, il est prévu que le réglage soit effectué du côté gauche de la machine de travail du sol (1).

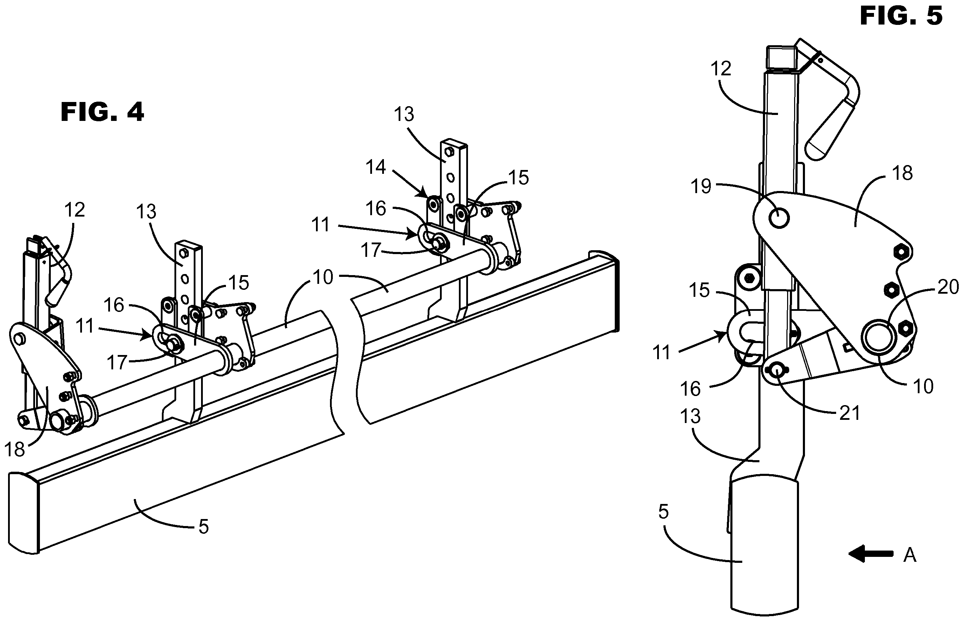

La figure 4 représente les deux extrémités de la planche niveleuse (5). Elle comporte deux glissières (13) destinées à venir se prendre dans un dispositif de guidage (14) respectif. Une glissière (13) est disposée à chaque extrémité de la planche niveleuse (5). Le dispositif de guidage (14) permet de guider le déplacement de la planche niveleuse (5) essentiellement verticalement lors d'un réglage. Le dispositif de guidage (14) est monté sur l'organe de référence (4). Ce guidage prévient toute interférence entre la planche niveleuse (5) et l'organe de référence (4) ou entre la planche niveleuse (5) et les outils de travail (3). Grâce au réglage centralisé, les deux glissières (13) sont soulevées ou abaissées simultanément, ce qui évite le coincement des glissières (13) dans le dispositif de guidage (14). La planche niveleuse (5) peut donc retenir les mottes à portée des outils de travail (3) sur toute sa longueur jusqu'à ce qu'elles soient suffisamment réduites pour s'échapper et créer ainsi un lit de semence homogène.

D'une manière avantageuse, la position du dispositif de réglage (12) de la barre de commande (10) est dissociée du dispositif de guidage (14) de la planche niveleuse (5). Le dispositif de réglage (12) peut donc être placé n'importe où sur la machine de travail du sol (1), de préférence à un endroit accessible facilement pour l'utilisateur. La position du dispositif de réglage (12) n'est pas imposée par le dispositif de guidage (14). D'une manière avantageuse, le dispositif de réglage (12) est placé proche d'une extrémité latérale de la machine de travail du sol (1) pour pouvoir être actionné par l'utilisateur en toute sécurité. D'après les figures 2 et 3, le dispositif de réglage (12) se trouve du côté gauche. Le dispositif de réglage (12) est réalisé par une chandelle à vis. Le réglage en hauteur permet d'adapter la planche niveleuse (5) à la nature du terrain et à la profondeur de travail pour que le flux de terre soit projeté sur la planche niveleuse (5). Il faut maintenir un espace suffisant entre le bord inférieur de la planche niveleuse (5) et le sol pour permettre un écoulement de la terre vers l'organe de référence (4). Dans une alternative non représenté, le dispositif de réglage (12) est réalisé par un vérin, ce qui permet de modifier la hauteur de la planche niveleuse (5) depuis la cabine du tracteur.

D'après les figures 3 à 5, les moyens (11) autorisent un réglage fin et continu de la hauteur de la planche niveleuse (5), lorsque le dispositif de réglage (12) agit sur la barre de commande (10). Ces moyens (11) permettent de bloquer la hauteur de la planche niveleuse (5) dans les deux sens, ceci afin de maintenir la planche niveleuse (5) en position de travail à la hauteur réglée même lors de sollicitations importantes générées par le volume de terre. Les moyens (11) sont constitués d'au moins un bras (15). Une extrémité du bras (15) est solidaire de la barre de commande (10) et l'autre extrémité est liée à la planche niveleuse (5). L'extrémité liée à la planche niveleuse (5) est pourvue d'un trou oblong (16) dans lequel est amené à se déplacer un ergot (17). L'ergot (17) est lié à la planche niveleuse (5). La barre de commande (10) permet de retenir la planche niveleuse (5) par l'intermédiaire des moyens (11). L'ergot (17) est une pièce en saillie sur la glissière (13). Le diamètre de l'ergot (17) correspond à celui du trou oblong (16), il est tel qu'il puisse se déplacer dans le trou oblong (16). Le blocage dans les deux sens, vers le haut et vers le bas, de la planche niveleuse (5) pour le travail est réalisé par l'ergot (17) dans le trou oblong (16). Le bras (15) est verrouillé sur l'ergot (17) au moyen d'une goupille. Le trou oblong (16) présente une longueur permettant une plage de réglage en hauteur suffisante pour la planche niveleuse (5). Dans l'exemple de réalisation représenté, des moyens (11) s'étendent à chaque extrémité de la planche niveleuse (5).

A la lumière de la figure 5, le dispositif de réglage (12) est fixé de manière décalée latéralement sur la barre de commande (10) par rapport au dispositif de guidage (14). L'organe de référence (4) comporte un support (18) destiné à supporter le dispositif de réglage (12). Le dispositif de réglage (12) est articulé sur le support (18) au moyen d'une première articulation (19) d'axe sensiblement horizontal et perpendiculaire à la direction d'avance (A). Le support (18) comporte aussi un guide en rotation (20) pour la barre de commande (10). Le dispositif de réglage (12) est encore relié à la barre de commande (10) via une deuxième articulation (21) d'axe sensiblement horizontal et perpendiculaire à la direction d'avance (A). La deuxième articulation (21) est ménagée dans un autre bras solidaire de la barre de commande (10). Le dispositif de réglage (12) permet de modifier l'écartement entre la première articulation (19) et la deuxième articulation (21) et donc de créer un mouvement de rotation de la barre de commande (10). Cette rotation de la barre de commande (10) entraîne une modification de la hauteur de la planche niveleuse (5). La deuxième articulation (21) s'étend à la verticale de la première articulation (19).

De manière avantageuse, la planche niveleuse (5) est montée sur l'organe de référence (4). Une telle configuration permet de réaliser des réglages en hauteur moins fréquemment, puisque la profondeur de travail des outils de travail (3) est réglée par rapport à l'organe de référence (4). La hauteur de la planche niveleuse (5) est adaptée automatiquement lorsque la profondeur de travail change.

Selon les figures, la planche niveleuse (5) est fixée sur l'organe de référence (4) au moyen d'au moins deux glissières (13). Une glissière (13) est toujours associée à un dispositif de guidage (14). Selon un exemple de réalisation non représenté, lorsque la planche niveleuse (5) présente une grande largeur de travail, elle est par exemple montée et guidée via trois glissières (3). Deux glissières (13) s'étendent alors au voisinage des extrémités de la planche niveleuse (5) et une glissière vers le centre de la planche niveleuse (5). Chacune des glissières (13) est alors reliée à la barre de commande (10) via les moyens (11).

La machine agricole conforme à l'invention peut être une machine rigide ou une machine repliable en au moins deux parties. Dans le cas d'une machine rigide, l'utilisateur pourra choisir la position de placement du dispositif de réglage (12) d'un côté ou de l'autre de la poutre transversale (2). Lorsque la machine est du type repliable, la poutre transversale (2) est réalisée en au moins deux parties. Chaque partie est équipée d'un dispositif de réglage (12). Dans ce cas, la partie centrale de la machine n'étant pas facilement accessible, le dispositif de réglage (12) est alors placé du côté extérieur de chaque partie.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Machine de travail du sol (1) comportant une poutre transversale (2) supportant des outils de travail (3), un organe de référence (4) et une planche niveleuse (5) s'étendant entre lesdits outils de travail (3) et ledit organe de référence (4), ladite planche niveleuse (5) étant réglable en hauteur par rapport auxdits outils de travail (3), ladite planche niveleuse (5) présentant une barre de commande (10) actionné par l'intermédiaire d'un dispositif de réglage (12) pour effectuer un réglage en hauteur centralisé et des moyens (11) pour transformer un mouvement de rotation de ladite barre de commande (10) en mouvement de translation de ladite planche niveleuse (5), **caractérisée en ce que** lesdits moyens (11) présentent un bras (15), une extrémité dudit bras (15) étant solidaire de ladite barre de commande (10) et l'autre extrémité étant liée à ladite planche niveleuse (5), ledit bras (15) est pourvu d'un trou oblong (16) dans lequel est amené à se déplacer un ergot (17), ledit ergot (17) est lié à ladite planche niveleuse (5).

2. Machine de travail du sol selon la revendication 1, ***caractérisée en ce que*** ladite barre de commande (10) présente une longueur sensiblement égale à la largeur de ladite machine de travail du sol (1).

3. Machine de travail du sol selon la revendication 1 ou 2, ***caractérisée en que*** lesdits moyens (11) autorisent un réglage en hauteur continu sur la plage de réglage de ladite planche niveleuse (5)

4. Machine de travail du sol selon l'une quelconque des revendications 1 à 3, ***caractérisée en ce que*** lesdits moyens (11) permettent un blocage en hauteur de ladite planche niveleuse (5) dans les deux sens.

5. Machine de travail du sol selon l'une quelconque des revendications 1 à 4, ***caractérisée en ce que*** chaque extrémité de ladite planche niveleuse (5) présente lesdits moyens (11).

6. Machine de travail du sol selon l'une quelconque des revendications 1 à 5, ***caractérisée en ce qu'**un* dispositif de guidage (14) permet de guider la translation sensiblement vertical de ladite planche niveleuse (5).

7. Machine de travail du sol selon la revendication 6, ***caractérisée en ce que*** ledit dispositif de réglage (12) est dissocié dudit dispositif de guidage (14).

8. Machine de travail du sol selon la revendication 6 ou 7, ***caractérisée en ce que*** ledit dispositif de réglage (12) est fixé de manière décalée sur ladite barre de commande (10) par rapport audit dispositif de guidage (14).

9. Machine de travail du sol selon l'une quelconque des revendications 1 à 8, ***caractérisée en ce que*** ledit dispositif de réglage (12) est placé proche d'une extrémité latérale de la machine de travail du sol (1).

10. Machine de travail du sol selon l'une quelconque des revendications 1 à 9, ***caractérisée en ce que*** ledit dispositif de réglage (12) est fixé sur l'organe de référence (4) via une première articulation (19) d'axe horizontal et est fixé sur ladite barre de commande (10) via une deuxième articulation (21) d'axe horizontal.

11. Machine de travail du sol selon la revendication 10, ***caractérisée en ce que*** ledit dispositif de réglage (12) permet de modifier l'écartement entre ladite première articulation (19) et ladite deuxième articulation (21).

12. Machine de travail du sol selon l'une quelconque des revendications 1 à 11, ***caractérisée en ce que*** ladite planche niveleuse (5) est montée sur ledit organe de référence (4).

## Patentansprüche

1. Bodenbearbeitungsmaschine (1)mit einem Querbalken (2), der Arbeitswerkzeuge (3) trägt, einem Bezugselement (4) und einem Planierbrett (5), das sich zwischen den Arbeitswerkzeugen (3) und dem Bezugselement (4) erstreckt, wobei das Planierbrett (5) in Bezug auf die Arbeitswerkzeuge (3) höhenverstellbar ist, wobei das Planierbrett (5) eine Steuerstange (10) aufweist, die mittels einer Einstellvorrichtung (12) betätigt wird, um eine zentrale Höheneinstellung durchzuführen, und Mittel (11) zum Umwandeln einer Drehbewegung der Steuerstange (10) in eine Verschiebungsbewegung des Planierbretts (5), ***dadurch gekennzeichnet, dass*** die Mittel (11) einen Arm (15) aufweisen, wobei ein Ende des Arms (15) fest mit der Steuerstange (10) verbunden ist und das andere Ende mit dem Planierbrett (5) verbunden ist, wobei der Arm (15) mit einem Langloch (16) versehen ist, in dem sich ein Nocken (17) bewegen soll, wobei der Nocken (17) mit dem Planierbrett (5) verbunden ist.

2. Bodenbearbeitungsmaschine nach Anspruch 1, ***dadurch gekennzeichnet, dass*** die Steuerstange (10) eine Länge aufweist, die im Wesentlichen gleich ist wie die Breite der Bodenbearbeitungsmaschine (1).

3. Bodenbearbeitungsmaschine nach Anspruch 1 oder 2, ***dadurch gekennzeichnet, dass*** die Mittel (11) eine kontinuierliche Höheneinstellung auf dem Einstellbereich des Planierbretts (5) gestatten.

4. Bodenbearbeitungsmaschine nach irgendeinem der Ansprüche 1 bis 3, ***dadurch gekennzeichnet, dass*** die Mittel (11) ein Höhenfeststellen des Planierbretts (5) in beide Richtungen ermöglichen.

5. Bodenbearbeitungsmaschine nach irgendeinem der Ansprüche 1 bis 4, ***dadurch gekennzeichnet, dass*** jedes Ende des Planierbretts (5) die Mittel (11) aufweist.

6. Bodenbearbeitungsmaschine nach irgendeinem der Ansprüche 1 bis 5, ***dadurch gekennzeichnet, dass*** eine Führungsvorrichtung (14) das Führen der im Wesentlichen vertikalen Verschiebung des Planierbretts (5) ermöglicht.

7. Bodenbearbeitungsmaschine nach Anspruch 6, ***dadurch gekennzeichnet, dass*** die Einstellvorrichtung (12) von der Führungsvorrichtung (14) getrennt ist.

8. Bodenbearbeitungsmaschine nach Anspruch 6 oder 7, ***dadurch gekennzeichnet, dass*** die Einstellvorrichtung (12) auf der Steuerstange (10) in Bezug auf die Führungsvorrichtung (14) versetzt befestigt ist.

9. Bodenbearbeitungsmaschine nach irgendeinem der Ansprüche 1 bis 8, ***dadurch gekennzeichnet, dass*** die Einstellvorrichtung (12) nahe einem seitlichen Ende der Bodenbearbeitungsmaschine (1) platziert ist.

10. Bodenbearbeitungsmaschine nach irgendeinem der Ansprüche 1 bis 9, ***dadurch gekennzeichnet, dass*** die Einstellvorrichtung (12) auf dem Bezugselement (4) über ein erstes Gelenk (19) mit horizontaler Achse und auf der Steuerstange (10) über ein zweites Gelenk (21) mit horizontaler Achse befestigt ist.

11. Bodenbearbeitungsmaschine nach Anspruch 10, ***dadurch gekennzeichnet, dass*** die Einstellvorrichtung (12) eine Änderung des Abstands zwischen dem ersten Gelenk (19) und dem zweiten Gelenk (21) ermöglicht.

12. Bodenbearbeitungsmaschine nach irgendeinem der Ansprüche 1 bis 11, ***dadurch gekennzeichnet, dass*** das Planierbrett (5) auf dem Bezugselement (4) angebracht ist.

## Claims

1. Soil-working machine (1) comprising a transverse beam (2) supporting work tools (3), a reference member (4) and a levelling board (5) extending between the said work tools (3) and the said reference member (4), the said levelling board (5) being vertically adjustable with respect to the said work tools (3), the said levelling board (5) has a control bar (10) actuated by means of an adjustment device (12) to carry out a centralized vertical adjustment and means (11) to transform a rotational movement of the said control bar (10) into a translation movement of the said levelling board (5) ***characterized in that*** the said means (11) comprise an arm (15), one end of the said arm (15) being rigidly fastened to the said control bar (10) and the other end being connected to the said levelling board (5), the said arm is provided with an oblong hole (16) in which a lug (17) is brought to move, the said lug (17) is linked to the said levelling board (5).

2. Soil-working machine according to Claim 1, ***characterized in that*** the said control bar (10) has a length substantially equal to the width of the said soil-working machine (1).

3. Soil-working machine according to Claim 1 or 2, ***characterized in that*** the said means (11) allow a continuous vertical adjustment over the adjustment range of the said levelling board (5).

4. Soil-working machine according to any one of Claims 1 to 3, ***characterized in that*** the said means (11) allow a vertical blocking of the said levelling board (5) in the two directions.

5. Soil-working machine according to any one of Claims 1 to 4, ***characterized in that*** each end of the said levelling board (5) has the said means (11).

6. Soil-working machine according to any one of Claims 1 to 5, ***characterized in that*** a guiding device (14) makes it possible to guide the substantially vertical translation of the said levelling board (5).

7. Soil-working machine according to Claim 6, ***characterized in that*** the said adjustment device (12) is dissociated from the said guiding device (14).

8. Soil-working machine according to Claim 6 or 7, ***characterized in that*** the said adjustment device (12) is fixed in an offset manner on the said control bar (10) with respect to the said guiding device (14).

9. Soil-working machine according to any one of Claims 1 to 8, ***characterized in that*** the said adjustment device (12) is placed close to a lateral end of the soil-working machine (1).

10. Soil-working machine according to any one of Claims 1 to 9, ***characterized in that*** the said adjustment device (12) is fixed on the reference member (4) via a first articulation (19) having a horizontal axis, and is fixed on the said control bar (10) via a second articulation (21) having a horizontal axis.

11. Soil-working machine according to Claim 10, ***characterized in that*** the said adjustment device (12) makes it possible to modify the space between the said first articulation (19) and the said second articulation (21).

12. Soil-working machine according to any one of Claims 1 to 11, ***characterized in that*** the said levelling board (5) is mounted on the said reference member (4).
